# EUROPÄISCHE PATENTANMELDUNG

(11) **EP 4 821 337 A1**
(43) Veröffentlichungstag der Anmeldung: **14.10.2026**
(21) Anmeldenummer: 26166231.6
(22) Anmeldetag: 19.03.2026
(51) Int. Cl.: A01C 17/00

(54) **SCHLEUDERSCHEIBE FÜR EINE LANDWIRTSCHAFTLICHE VERTEILMASCHINE UND LANDWIRTSCHAFTLICHE VERTEILMASCHINE**

(30) Priorität: 09.04.2025 DE 102025114032
(71) Anmelder: Kverneland Group Nieuw-Vennep B.V., 2153 LR Nieuw-Vennep (NL)
(72) Erfinder: THYBAUT, Maarten, Nieuw-Vennep (NL)
(74) Vertreter: Schlegel, Sebastian

(57) **Zusammenfassung**

Die Offenlegungsschrift betrifft eine Schleuderscheibe (1) für eine landwirtschaftliche Verteilmaschine mit einem Drehscheibenkörper (2) und Wurfflügeln (5), die auf einer Flachseite (4) des Drehscheibenkörpers (2) umlaufend beabstandet voneinander angeordnet und jeweils betreibbar sind, im Betrieb beim Drehen des Drehscheibenkörpers (2) um eine Drehachse (6) auf eine Arbeitsfläche (7) des Wurfflügels (5) entlang wenigstens einer Flugrichtung zu fliegende und auf diese auftreffende Streupartikel eines auszubringenden Materials vom Drehscheibenkörper (2) weg zu schleudern. Bei den Wurfflügeln (5) ist jeweils Folgendes vorgesehen: ein distaler Flügelabschnitt (5a), welcher von der Flachseite (4) des Drehscheibenkörpers (2) absteht und an dem die Arbeitsfläche (7) gebildet ist; ein proximaler Flügelabschnitt (5b), welcher zum distalen Flügelabschnitt (5a) abgewinkelt ausgebildet und zumindest teilweise in einer zugeordneten Vertiefung (8) auf der Flachseite (4) des Drehscheibenkörpers (2) angeordnet ist; und ein Rand (11) des proximalen Flügelabschnitts (5b) ist in einem Randabschnitt (12) von einem dem Rand (11) gegenüberliegenden Vertiefungsrand (13) der zugeordneten Vertiefung (8) wenigstens teilweise abgedeckt, wobei der Randabschnitt (12) die mindestens eine Flugrichtung erfasst, entlang welcher die Streupartikel des auszubringenden Materials im Betrieb auf die Arbeitsfläche (7) zu fliegen, derart, dass die mindestens eine Flugrichtung den Rand (11) des proximalen Flügelabschnitts (5b) in dem Randbereich (12) kreuzt. Weiterhin ist eine landwirtschaftliche Verteilmaschine geschaffen.

## Beschreibung

Die Erfindung betrifft eine Schleuderscheibe für eine landwirtschaftliche Verteilmaschine sowie eine landwirtschaftliche Verteilmaschine, insbesondere Düngerstreuer.

### Hintergrund

In der Landwirtschaft dienen solche Verteilmaschinen zum Verteilen von Streupartikeln eines auszubringenden Materials, zum Beispiel Dünger. Zum Verteilen der Streupartikel sind Streu- oder Verteilsysteme bekannt, die ein oder mehrere Schleuderscheiben aufweisen, welche auch als Wurfscheiben oder Streuscheiben bezeichnet werden. Die Schleuderscheibe ist drehbar im Verteilsystem gelagert und weist regelmäßig einen Drehscheibenkörper sowie hierauf angeordnete Wurf- oder Schleuderflügel auf. Im Betrieb dreht sich die Schleuderscheibe um eine Drehachse. Streupartikel des auszubringenden Materials fliegen entlang einer Flugrichtung auf die Wurfflügel der sich drehenden Schleuderscheibe zu und werden nach dem Auftreffen auf den Wurfflügel von diesem von der Schleuderscheibe weg geschleudert.

Aus dem Dokument DE 10 2010 060 155 A1 ist ein Schleuderdüngerstreuer mit Vorratsbehälter bekannt, bei dem unter dem Vorratsbehälter ein oder mehrere um aufrechte Achsen mittels zumindest einer in einem Gehäuse drehbar gelagerten Antriebswelle rotierend antreibbare Schleuderscheiben angeordnet sind. Auf den Schleuderscheiben ist eine verstellbare Wurfschaufel angeordnet, die mit Hilfe einer Versteileinrichtung verstellbar ist. Eine der Wurfschaufeln ist ein Stellelement zugeordnet über welches die Wurfschaufel während des rotierenden Antriebes der Schleuderscheibe verstellbar ist. Das Betätigungselement weist ein verschiebbares Schaltelement auf, welches oberhalb des Gehäuses die Antriebswelle umfasst und gegenüber der Antriebswelle in axialer Richtung verschiebbar ist. Um die Versteileinrichtung zum Verstellen der Wurfschaufeln oder Teilbereiche der Wurfschaufeln zu verbessern, ist vorgesehen, dass zwischen der Antriebswelle und dem verschiebaren Schaltelement eine schräg zur Drehachse der Antriebswelle und / oder zumindest annähernd schraubenlinienförmig verlaufende Schaltnut und zumindest ein in die Schaltnut eingreifendes Mitnahmeelement angeordnet sind.

### Zusammenfassung

Aufgabe der Erfindung ist es, eine Schleuderscheibe für eine landwirtschaftliche Verteilmaschine sowie eine landwirtschaftliche Verteilmaschine zu schaffen, mit denen Streupartikel eines auszubringenden Materials auf verbesserte Art und Weise verteilt werden können.

Zur Lösung sind eine Schleuderscheibe für eine landwirtschaftliche Verteilmaschine sowie eine landwirtschaftliche Verteilmaschine nach den unabhängigen Ansprüchen 1 und 13 geschaffen. Ausgestaltungen sind Gegenstand von abhängigen Unteransprüchen.

Nach einem Aspekt ist eine Schleuderscheibe für eine landwirtschaftliche Verteilmaschine geschaffen, die einen Drehscheibenkörper sowie Wurfflügel aufweist, die auf einer Flachseite des Drehscheibenkörpers umlaufend beabstandet voneinander angeordnet und jeweils betreibbar sind, im Betrieb beim Drehen des Drehscheibenkörpers um eine Drehachse auf eine Arbeitsfläche des Wurfflügels entlang wenigstens einer Flugrichtung zu fliegende und auf diese auftreffende Streupartikel eines auszubringenden Materials vom Drehscheibenkörper weg zu schleudern. Bei den Wurfflügeln ist jeweils Folgendes vorgesehen: ein distaler Flügelabschnitt, welcher von der Flachseite des Drehscheibenkörpers absteht und an dem die Arbeitsfläche gebildet ist; ein proximaler Flügelabschnitt, welcher zum distalen Flügelabschnitt abgewinkelt ausgebildet und zumindest teilweise in einer zugeordneten Vertiefung auf der Flachseite des Drehscheibenkörpers angeordnet ist; und ein Rand des proximalen Flügelabschnitts ist in einem Randabschnitt von einem dem Rand gegenüberliegenden Vertiefungsrand der zugeordneten Vertiefung wenigstens teilweise abgedeckt, wobei der Randabschnitt die mindestens eine Flugrichtung erfasst, entlang welcher die Streupartikel des auszubringenden Materials im Betrieb auf die Arbeitsfläche zu fliegen, derart, dass die mindestens eine Flugrichtung den Rand des proximalen Flügelabschnitts in dem Randbereich kreuzt.

Nach einem weiteren Aspekt ist eine landwirtschaftliche Verteilmaschine mit einem Drehscheibenstreusystem geschaffen, welches eingerichtet ist, Streupartikel eines auszubringenden Materials zu verteilen, wobei das Drehscheibenstreusystem eine Schleuderscheibe der vorgenannten Art aufweist.

Bei der geschaffenen Schleuderscheibe ist vorgesehen, für die Wurfflügel jeweils einen proximalen Flügelabschnitt in einer zugeordneten Vertiefung auf der Flachseite des Drehscheibenkörpers anzuordnen. Hierdurch ist ein Rand des proximalen Flügelabschnitts in einem Randabschnitt oder -bereich von einem dem Rand gegenüberliegenden Vertiefungsrand der zugeordneten Vertiefung teilweise oder ganz abgedeckt. Der Randbereich betrifft einen Abschnitt des Rands des proximalen Flügelabschnitts, welcher von einer oder mehreren Flugrichtungen oder -kurven der Streupartikel des auszubringenden Materials im Betrieb gekreuzt wird, wenn die Streupartikel aus einer Streupartikelquelle heraus auf die Arbeitsfläche des Wurfflügels zu fliegen, um dann im Bereich der Arbeitsfläche auf den Wurfflügel zu treffen. Die Drehbewegung des Drehscheibenkörpers mit den hierauf angeordneten Wurfflügeln bewirkt dann das Wegschleudern oder Wegwerfen der Streupartikel mittels der Wurfflügel, wodurch das Material verteilt wird, beispielsweise Streupartikel eines Düngermaterials. Das zumindest teilweise Abdecken des Randabschnitts, welcher von der einen oder den mehreren Flugrichtungen der Streupartikel auf dem Weg zur Arbeitsfläche des Wurfflügels hin gekreuzt wird, minimiert die Wahrscheinlichkeit dafür, dass auf den Wurfflügel zu fliegende Streupartikel auf den Rand des proximalen Flügelabschnitts treffen und so unkontrolliert herumfliegen. Auf diese Weise ist das zufällige Auftreffen von Streupartikeln auf den Rand des proximalen Flügelabschnitts in dem Randabschnitt minimiert oder ganz verhindert.

Der Drehscheibenkörper kann ein kreisförmiger Drehscheibenkörper sein. Bezüglich der Drehachse, welche in Bezug auf die Flachseite des Drehscheibenkörpers aufrechtstehend angeordnet ist, kann der Drehscheibenkörper rotationsymmetrisch ausgebildet sein.

Die Wurfflügel können in einer Ausgestaltung lösbar an dem Drehscheibenkörper befestigt sein. Alternativ kann eine nichtlösbare oder nicht zerstörungsfreie lösbare Verbindung zwischen dem Drehscheibenkörper und dem jeweiligen Wurfflügel ausgebildet sein.

Der gegenüber dem distalen Flügelabschnitt abgewinkelte proximale Flügelabschnitt kann mit dem distalen Flügelabschnitt beispielsweise einen Winkel von etwa 90 Grad einnehmen.

Der proximale Flügelabschnitt kann als ein ebener und flacher Flügelabschnitt ausgeführt sein. In der Vertiefung kann der proximale Flügelabschnitt auf der Oberfläche des Drehscheibenkörpers flächig aufliegend angeordnet sein.

Der Rand des proximalen Flügelabschnitts und / oder der gegenüberliegende Vertiefungsrand können mit einer jeweiligen auf dem Scheibenkörper aufrechtstehenden Randfläche gebildet sein, zum Beispiel wenigstens in dem Randabschnitt.

Die zugeordnete Vertiefung kann den proximalen Flügelabschnitt im Wesentlichen formschlüssig aufnehmen. Zum Beispiel können der proximale Flügelabschnitt und die Vertiefung mit einer gleichen Flächenform ausgebildet sein.

Der Rand des proximalen Flügelabschnitts und der gegenüberliegende Vertiefungsrand der zugeordneten Vertiefung können bei dieser oder anderen Ausgestaltungen zumindest abschnittsweise in Berührungskontakt oder alternativ beabstandet voneinander angeordnet sein, insbesondere im Randabschnitt, welcher die mindestens eine Flugrichtung erfasst.

Im Bereich des Randabschnitts kann eine Randhöhe des Vertiefungsrands wenigstens gleich einer Randhöhe des Randes des proximalen Flügelabschnitts sein. Auf diese Weise kann der Rand des proximalen Flügelabschnitts zumindest in dem Randabschnitt vom gegenüberliegenden Vertiefungsrand im Wesentlichen vollständig abgedeckt sein. Bei Ausgestaltungen kann vorgesehen sein, dass wenigstens im Randabschnitt die Randhöhe des Vertiefungsrands größer als die Randhöhe des gegenüberliegenden Randes des proximalen Flügelabschnitts ist.

Ein radial außenliegender Teil des distalen Flügelabschnitts kann in Bezug auf eine Oberfläche des Drehscheibenkörpers auf der Flachseite schräg nach oben geneigt sein. Der radial außenliegende Teil des distalen Flügelabschnitts kann ein über einen Scheibenrand des Drehscheibenkörpers überstehender Teil des distalen Flügelabschnitts sein. Die schräg nach oben ausgerichtete Neigung kann in Bezug auf einen Oberflächenabschnitt der Oberfläche auf der Flachseite des Drehscheibenkörpers ausgebildet sein, welcher im rechten Winkel zur Drehachse verläuft. Ein solcher Oberflächenabschnitt kann beispielsweise in einem mittleren Abschnitt des Drehscheibenkörpers benachbart zur Drehachse ausgebildet sein.

Ein oberer und / oder ein unterer Rand des radial außenliegenden Teils des distalen Flügelabschnitts können mit der Oberfläche des Drehscheibenkörpers auf der Flachseite einen Winkel zwischen etwa 160 Grad und etwa 180 Grad einnehmen, zum Beispiel etwa 170 Grad. Der obere und der untere Rand des radial außenliegenden Teils des Flügelabschnitts können bei dieser oder anderen Ausführungsbeispielen im Wesentlichen parallel zueinander verlaufen.

Die Arbeitsfläche kann in Bezug zur Drehachse des Drehscheibenkörpers im Wesentlichen parallel angeordnet sein. Die Arbeitsfläche steht dann senkrecht auf einem Abschnitt der Oberfläche auf der Flachseite des Drehscheibenkörpers, insbesondere zu einem mittleren Abschnitt des Drehscheibenkörpers, welcher seinerseits im rechten Winkel zur Drehachse ausgerichtet ist.

Eine Längsrichtung des proximalen Flügelabschnitts kann zu einer Verbindungslinie schräg angeordnet sein, welche einen Mittelpunkt des Drehscheibenkörpers, durch den die Drehachse verläuft, mit einem Drehpunkt im Bereich des proximalen Flügelabschnitts in Radialrichtung verbindet, um welchen der Wurfflügel zum Ausbilden einer Schrägstellung des Wurfflügels gedreht ist.

Die Verbindungslinie erstreckt sich durch den Mittelpunkt des Drehscheibenkörpers sowie einen Drehpunkt im Bereich des proximalen Flügelabschnitts in Radialrichtung. Zum Ausbilden der Schrägstellung wird der Wurfflügel, ausgehend von einer Lage, in welcher die Längsrichtung des Wurfflügels entlang der Verbindungslinie verläuft, um den Drehpunkt gedreht, derart, dass Längsrichtung des Wurfflügels und Verbindungslinie nicht mehr parallel verlaufen. Ausgehend von der Anordnung der Längsrichtung des Wurfflügels in Radialrichtung, kann die Drehung wahlweise in einer der beiden entgegengesetzten Drehrichtungen ausgebildet sein. Zwischen Längsrichtung des Wurfflügels und Verbindungslinie (Flügelabschnitt in Radialrichtung) kann so beispielsweise ein Winkel zwischen etwa -60 Grad und etwa 60 Grad ausgebildet sein.

Bei der umlaufenden Anordnung von Wurfflügeln auf dem Drehscheibenkörper können alle Wurfflügel zur Radialrichtung einen gleichen Drehwinkel einnehmen. Alternativ können ein oder mehrere unterschiedliche Drehwinkel vorgesehen sein. Mindestens zwei oder alle Wurfflügel können zur Verbindungslinie (Radialrichtung) um einen jeweils anderen Winkel gedreht sein.

Die zugeordnete Vertiefung kann in einem verdickten Drehscheibenkörperabschnitt angeordnet sein, in welchem der Drehscheibenkörper im Vergleich zu einem anderen Drehscheibenkörperabschnitt mit größerer Drehscheibenkörperdicke ausgeführt ist. Zum Beispiel kann der Drehscheibenkörper in einem radial außenliegenden Abschnitt mit größerer Materialdicke ausgebildet sein, also einen verdickten Drehscheibenkörperabschnitt aufweisen, als in einem radial innenliegenden Abschnitt des Drehscheibenkörpers, zum Beispiel einem um die Drehachse bzw. den Mittelpunkt herum gebildeten mittleren Abschnitt des Drehscheibenkörpers. Der verdickte Drehscheibenkörperabschnitt kann sich bis zum außenliegenden Rand des Drehscheibenkörpers erstrecken.

Die zugeordnete Vertiefung kann in einem konischen Drehscheibenkörperabschnitt angeordnet sein, in welchem der Drehscheibenkörper eine konische Form aufweist. Bei der konischen Ausbildung des Drehscheibenkörpers im Querschnitt kann vorgesehen sein, dass die Oberfläche auf der Flachseite des Drehscheibenkörpers umlaufend nach radial außen ansteigt. Der konische Drehscheibenkörperabschnitt kann einen innenliegenden Drehscheibenkörperabschnitt umgreifen, welcher frei von einer konischen Ausbildung ist.

Die Vertiefungen für die Wurfflügel können den aufgrund der konischen Ausbildung auf der Oberfläche des Drehscheibenkörpers ausgebildeten schrägen Verlauf der Oberfläche, zum Beispiel aufgrund einer nach außen hin ansteigenden Oberfläche auf der Flachseite, teilweise oder ganz korrigierend oder kompensierend ausgeführt sein, derart, dass der proximale Flügelabschnitt im Wesentlichen im rechten Winkel zur Drehachse verläuft.

Der Drehscheibenkörper kann ein Gussbauteil sein. Das Gussbauteil kann beispielsweise aus einem Aluminium- oder einem Zink-Material bestehen.

Der Drehscheibenkörper kann mehrteilig mit Drehscheibenkörperteilen ausgeführt sein, die lösbar miteinander verbunden sind. Die Drehscheibenkörperteile können beispielsweise entlang einer Trennlinie lösbar miteinander verbunden sein, die durch den Mittelpunkt des Drehscheibenkörpers verläuft. In einer Ausgestaltung kann der Drehscheibenkörper aus zwei Drehscheibenkörperhälften bestehen, die lösbar miteinander verbunden sind. Die mehrteilige Ausführung des Drehscheibenkörpers ermöglicht beispielsweise die Montage des Drehscheibenkörpers an einer Antriebswelle, wenn ein Durchstecken der Antriebswelle durch eine mittlere Öffnung des Drehscheibenkörpers nicht möglich ist.

Zur zusätzlichen Sicherung der beiden Drehscheibenkörperhälften aneinander kann eine Montageplatte auf der Unterseite des Drehscheibenkörpers vorgesehen sein. Die Montageplatte kann mit Hilfe von Montagemitteln am Drehscheibenkörper lösbar befestigt sein. Die Montagemittel können Ausnehmungen aufweisen, in welche in einer gezeigten Montagestellung zugeordnete Vorsprünge eingreifen, die am Drehscheibenkörper angeordnet sind. Die drehende Bewegung des Drehscheibenkörpers im Betrieb unterstützt das Halten der Vorsprünge in der jeweils zugeordneten Ausnehmung. Ein Rand am Vorsprung kann einen Rand der zugeordneten Ausnehmung in der Montagestellung zumindest einseitig umgreifen. Die Montagemittel können weiterhin Schraubmittel in Form von Drehknöpfen aufweisen. Mit Hilfe der Montagemittel werden die beiden Drehscheibenkörperhälften zusätzlich zusammengehalten, insbesondere im Drehbetrieb.

Der Drehscheibenkörper kann auf einer gegenüberliegenden Flachseite Scheibenverstärkungen aufweisen. Die Scheibenverstärkungen können zum Beispiel mit einer oder mehreren Verstärkungsrippen gebildet sein. Der Drehscheibenkörper kann in einer Ausgestaltung auf der Flachseite weitere Scheibenverstärkungen aufweisen, zum Beispiel in Form ein oder mehrerer Verstärkungsrippen.

In Verbindung mit der landwirtschaftlichen Verteilmaschine können die vorangehend im Zusammenhang mit der Schleuderscheibe erläuterten Ausgestaltungen entsprechend vorgesehen sein. Die landwirtschaftliche Verteilmaschine kann als landwirtschaftliche Düngerstreumaschine ausgeführt sein.

### Beschreibung von Ausführungsbeispielen

Im Folgenden werden weitere Ausführungsbeispiele unter Bezugnahme auf Figuren einer Zeichnung näher erläutert. Hierbei zeigen:
Fig. 1 eine schematische perspektivische Darstellung einer Schleuderscheibe für eine landwirtschaftliche Verteilmaschine von schräg oben;
Fig. 2 eine schematische perspektivische Darstellung der Schleuderscheibe aus Fig. 1 von schräg unten;
Fig. 3 eine schematische Darstellung der Schleuderscheibe aus Fig. 1 mit lösbar verbundenen Drehscheibenkörperteilen;
Fig. 4 eine schematische Darstellung betreffend eine Schrägstellung der Wurfflügel;
Fig. 5 eine schematische Teildarstellung mit einem Wurfflügel;
Fig. 6 eine schematische Teildarstellung mit Wurfflügel in Seitenansicht und
Fig. 7 eine schematische perspektivische Darstellung einer Drehscheibenkörperhälfte ohne montierte Wurfflügel.

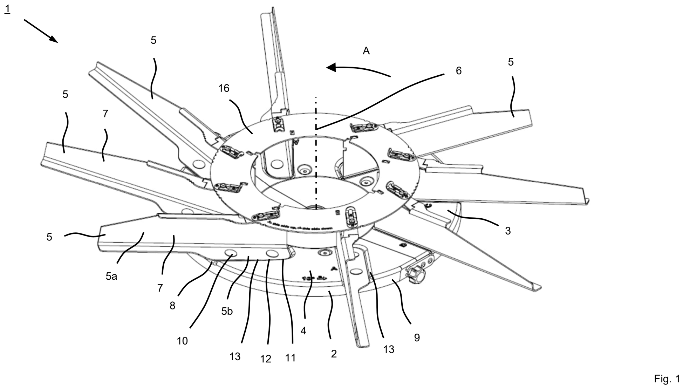

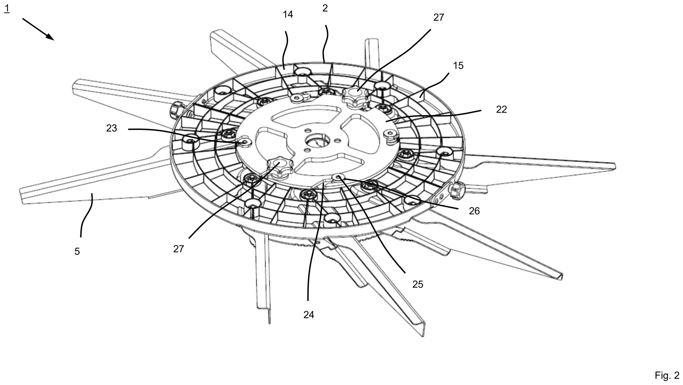

Fig. 1 und 2 zeigen eine schematische perspektivische Darstellung einer Schleuderscheibe 1 für eine landwirtschaftliche Verteilmaschine, insbesondere Düngerstreuer, von schräg oben und schräg unten. An einem Drehscheibenkörper 2 sind auf einer Scheibenoberfläche 3 auf einer Flachseite 4 Wurfflügel 5 umlaufend und voneinander beabstandet angeordnet. Im Verteilbetrieb dreht sich der Drehscheibenkörper 2 mit den Wurfflügeln 5 in einer Drehrichtung A um eine auf der Scheibenoberfläche 3 aufrechtstehende Drehachse 6, so dass Streupartikel eines auszubringenden Materials, welche aus einer Streupartikelquelle (nicht dargestellt) heraus auf eine jeweilige Arbeitsfläche 7 der Wurfflügel 5 zu fliegen und auf diese auftreffen, schließlich aufgrund der rotierenden Bewegung der Schleuderscheibe 1 von dieser nach radial außen weggeschleudert werden.

Die Arbeitsfläche 7 ist an einem distalen Abschnitt 5a der Wurfflügel 5 gebildet. Die Wurfflügel 5 weisen abgewinkelt zu dem distalen Flügelabschnitt 5a einen proximalen Flügelabschnitt 5b auf, welcher auf der Flachseite 4 des Drehscheibenkörpers 2 in einer jeweils zugeordneten Vertiefung 8 angeordnet ist, die auf der Flachseite 4 oberflächenseitig ausgebildet ist, im gezeigten Beispiel von einem Scheibenrand 9 des Drehscheibenkörpers 2 ausgehend. Befestigungsmittel 10 dienen dazu, die Wurfflügel 5 an dem Drehscheibenkörper 2 lösbar oder nicht lösbar zu montieren.

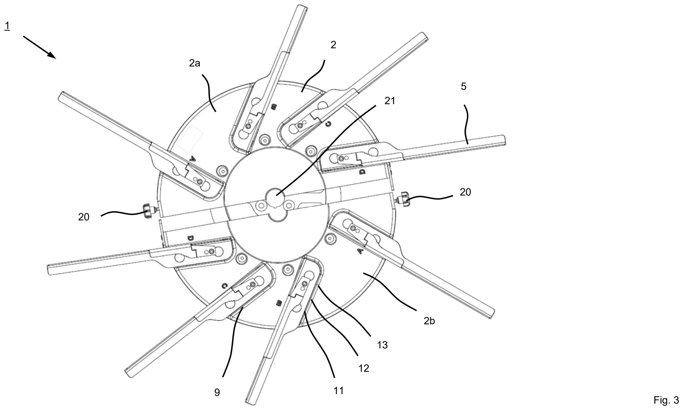

Wie insbesondere aus Fig. 1 ersichtlich ist der proximale Flügelabschnitt 5b bei der dargestellten Ausführungsform im Wesentlichen formschlüssig in der zugeordneten Vertiefung 8 aufgenommen (vgl. hierzu insbesondere auch Fig. 3).

Ein Rand 11 des proximalen Flügelabschnitts 5b ist einem Randabschnitt 12 durch einen gegenüberliegenden Vertiefungsrand 13 der zugeordneten Vertiefung abgedeckt oder verdeckt, was verhindert, dass Streupartikel die im Drehbetrieb der Schleuderscheibe 1 entlang einer oder mehrerer Flugrichtungen auf die Arbeitsfläche 7 der sich drehenden Wurfflügel 5 zu fliegen, zufällig auf den Rand 11 des proximalen Flügelabschnitts 5b treffen können und hierdurch unkontrolliert weggeschleudert werden.

Gemäß Fig. 2 weist der Drehscheibenkörper 2 auf einer gegenüberliegenden Flachseite 14 Verstärkungsrippen 15 auf, welche die mechanische Stabilität des Drehscheibenkörpers 2 unterstützen.

Der Drehscheibenkörper 2 kann beispielsweise als Gussbauteil hergestellt sein, zum Beispiel aus einem Aluminium- oder einem Zinkmaterial.

Zur Stabilisierung der Anordnung von Wurfflügeln 5 ist im gezeigten Beispiel gemäß Fig. 1 eine deckseitig angeordnete Montageplatte 16 vorgesehen.

Gemäß Fig. 3 ist der Drehscheibenkörper 2 bei der gezeigten Ausführungsform mit zwei Drehscheibenkörperhälften 2a, 2b gebildet, die lösbar miteinander verbunden sind. Hierfür sind Befestigungsmittel 20 vorgesehen, zum Beispiel Schraubmittel, die im gezeigten Beispiel auf gegenüberliegenden Seiten des Drehscheibenkörpers 2 angeordnet sind. Auf diese Weise ist es ermöglicht, die Schleuderscheibe 1 an einer Antriebswelle (nicht dargestellt) eines Verteil- oder Streusystems einer landwirtschaftlichen Verteilmaschine zu montieren, auch wenn ein Durchstecken der Antriebswelle durch eine mittlere Öffnung 21 im Mittelpunkt des Drehscheibenkörpers 2 nicht möglich ist.

Aus Fig. 2 ergibt sich, dass zur zusätzlichen Sicherung der beiden Drehscheibenkörperhälften 2a, 2b aneinander eine Montageplatte 22 auf der Unterseite des Drehscheibenkörpers 2 vorgesehen ist. Die Montageplatte 22 ist mit Hilfe von Montagemitteln 23 am Drehscheibenkörper 2 lösbar befestigt. Die Montagemittel 23 umfassen im gezeigten Beispiel Ausnehmungen 24, in welche in der gezeigten Montagestellung zugeordnete Vorsprünge 25 eingreifen, die am Drehscheibenkörper 2 angeordnet sind. Die drehende Bewegung des Drehscheibenkörpers 2 im Betrieb unterstützt das Halten der Vorsprünge 25 in der jeweils zugeordneten Ausnehmung 24. Ein Rand 26 am Vorsprung 25 übergreift einen Rand der zugeordneten Ausnehmung 24 in der dargestellten Montagestellung. Die Montagemittel 23 weisen weiterhin Schraubmittel 27 in Form von Drehknöpfen auf. Mit Hilfe der Montagemittel 23 werden die beiden Drehscheibenkörperhälften 2a, 2b zusätzlich zusammengehalten, insbesondere im Drehbetrieb.

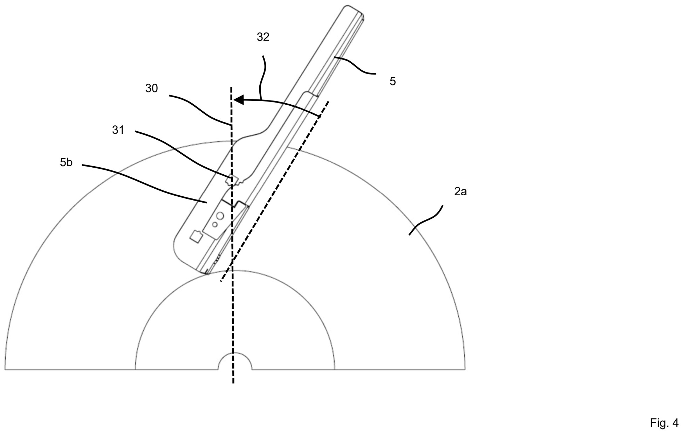

Fig. 4 zeigt eine schematische Detaildarstellung einer Drehscheibenkörperhälfte 2a von oben. Zur vereinfachten Darstellung ist nur einer der Wurfflügel 5 gezeigt. Es ergibt sich, dass eine Längsrichtung des Wurfflügels 5 in Bezug auf eine Verbindungslinie 30 zwischen dem Mittelpunkt des Drehscheibenkörpers 2 und einem Drehpunkt 31 im Bereich des proximalen Flügelabschnitts 5b schräg gestellt ist, derart, dass die Verbindungslinie 30 (Radialrichtung) und die Längsrichtung des Wurfflügels 5 einen Winkel 32 einschließen, beispielsweise einen Winkel zwischen etwa -60 Grad und etwa 60 Grad. Positive und negative Winkel geben hierbei an, dass der Wurfflügel 5 ausgehend von der Erstreckung entlang der Verbindungslinie (Radialrichtung) in den beiden entgegengesetzten Drehrichtungen gedreht werden kann.

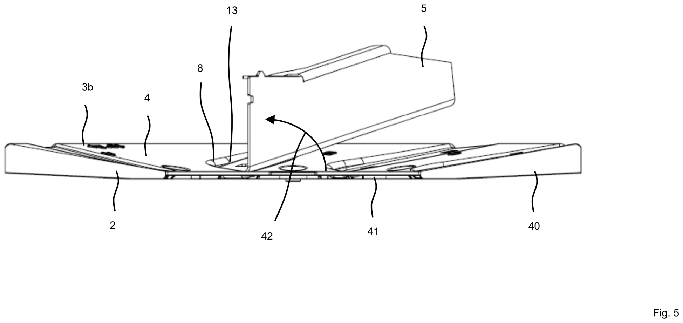

Gemäß der Darstellung in Fig. 5 weist der Drehscheibenkörper 2 einen konischen Drehscheibenkörperabschnitt 40 mit auf der Flachseite 3 nach außen ansteigender Oberfläche auf, wohingegen ein mittlerer Drehscheibenkörperabschnitt 41 flach ausgebildet ist, wo die Oberfläche auf der Flachseite 4 im Wesentlichen senkrecht zur Drehachse 6 ausgerichtet ist. Hierdurch ist eine konische Ausbildung am Drehscheibenkörper 2 gebildet, derart, dass die Scheibenoberfläche 3 auf der Flachseite 4 des Drehscheibenkörpers 2 nach radial außen ansteigt. Hierzu kann der Drehscheibenkörper 2 zum Beispiel mit einer entsprechenden Material- oder Scheibenverdickung ausgeführt sein.

Der proximale Flügelabschnitt 5b verläuft im gezeigten Beispiel relative zur Drehachse 6 parallel und nimmt mit der Scheibenoberfläche 3, welche senkrecht zur Drehachse 6 ausgerichtet ist, einen rechten Winkel 42 ein. Auf diese Weise ist auch die Arbeitsfläche 7 am proximalen Flügelabschnitt 5b zur Drehachse parallel ausgerichtet.

Die Vertiefungen 8 für die Wurfflügel 5 können in einer alternativen Ausgestaltung den aufgrund der konischen Ausbildung des Drehscheibenkörpers 2 ausgebildeten schrägen Verlauf auf der Scheibenoberfläche 3 teilweise oder ganz korrigierend oder kompensierend ausgeführt sein, derart, dass der proximale Flügelabschnitt 5b im Wesentlichen im rechten Winkel zur Drehachse 6 verläuft.

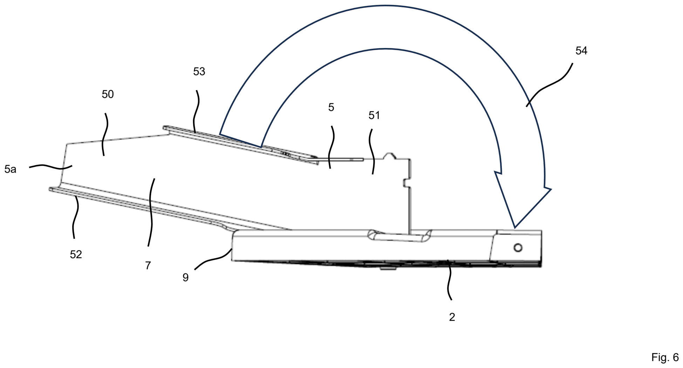

Fig. 6 zeigt eine Detaildarstellung mit einer Seitenansicht eines Wurfflügels 5 auf dem Drehscheibenkörper 2. Der distale Flügelabschnitt 5a weist einen außenliegend Abschnitt 50, welcher über den Scheibenrand 9 übersteht, und einen innenliegenden Abschnitt 51 auf.

Ein unterer und ein oberer Rand 52, 53 des Wurfflügels 5, welche im gezeigten Beispiel die Arbeitsfläche 7 begrenzen, sind schräg nach oben geneigt. Hierbei nehmen der untere und der obere Rand 52, 53 zum Beispiel einen Winkel 54 von etwa 170 Grad mit einem Oberflächenabschnitt des Drehscheibenkörpers 2 ein, welcher im Wesentlichen rechtwinklig zur Drehachse 6 verläuft. Der Winkel 54 kann beispielweise in einem Bereich zwischen etwa 160 Grad und etwa 180 Grad liegen. In einer alternativen Ausgestaltung kann vorgesehen sein, dass unterer und oberer Rand 52, 53 nicht parallel zueinander verlaufen. Hierbei kann der Winkel 54 von etwa 170 beispielweise nur für den unteren Rand 52 ausgebildet sein.

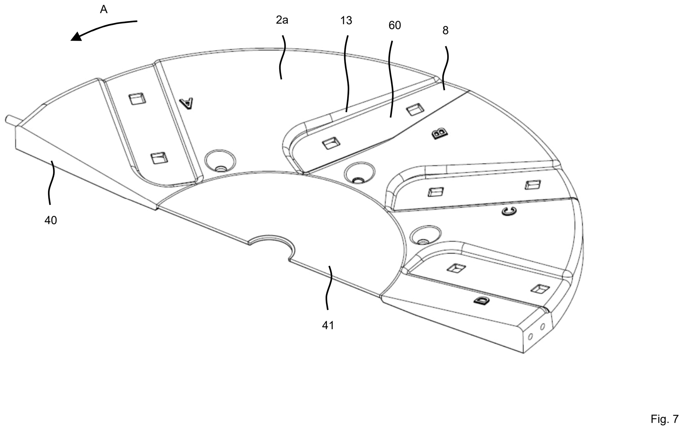

Fig. 7 zeigt eine schematische perspektivische Darstellung der Drehscheibenkörperhälfte 2a von schräg oben, mit den Vertiefungen 8, wobei am Drehscheibenkörper 2 keine Wurfflügel 5 montiert sind. Bei der Montage der Wurfflügel 5 in der jeweiligen Vertiefung 8 kommt der proximale Flügelabschnitt 5b auf einer Vertiefungsfläche 60 flächig zur Auflage, die ihrerseits teilweise vom Vertiefungsrand 13 umgeben ist.

Beim gezeigten Beispiel verläuft die Vertiefungsfläche 60 schräg zu der Scheibenoberfläche 3 im konischen Drehscheibenkörperabschnitt 40, so dass deren nach außen ansteigender Schrägverlauf für die Auflage des proximalen Flügelabschnitts 5b auf der Vertiefungsfläche 60 verstärkt (größere Schräglage) oder wenigstens teilweise kompensiert werden kann.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Schleuderscheibe (1) für eine landwirtschaftliche Verteilmaschine, mit
- einem Drehscheibenkörper (2) und
- Wurfflügeln (5), die auf einer Flachseite (4) des Drehscheibenkörpers (2) umlaufend beabstandet voneinander angeordnet und jeweils betreibbar sind, im Betrieb beim Drehen des Drehscheibenkörpers (2) um eine Drehachse (6) auf eine Arbeitsfläche (7) des Wurfflügels (5) auftreffende Streupartikel eines auszubringenden Materials, welche entlang wenigstens einer Flugrichtung auf die Arbeitsfläche (7) des Wurfflügels (5) zu fliegen und auf diese auftreffen, vom Drehscheibenkörper (2) weg zu schleudern;
wobei bei den Wurfflügeln (5) jeweils Folgendes vorgesehen ist:
- ein distaler Flügelabschnitt (5a), welcher von der Flachseite (4) des Drehscheibenkörpers (2) absteht und an dem die Arbeitsfläche (7) gebildet ist;
- ein proximaler Flügelabschnitt (5b), welcher zum distalen Flügelabschnitt (5a) abgewinkelt ausgebildet und zumindest teilweise in einer zugeordneten Vertiefung (8) auf der Flachseite (4) des Drehscheibenkörpers (2) angeordnet ist; und
- ein Rand (11) des proximalen Flügelabschnitts (5b) ist in einem Randabschnitt (12) von einem dem Rand (11) gegenüberliegenden Vertiefungsrand (13) der zugeordneten Vertiefung (8) wenigstens teilweise abgedeckt, wobei der Randabschnitt (12) die mindestens eine Flugrichtung erfasst, entlang welcher die Streupartikel des auszubringenden Materials im Betrieb auf die Arbeitsfläche (7) zu fliegen, derart, dass die mindestens eine Flugrichtung den Rand (11) des proximalen Flügelabschnitts (5b) in dem Randbereich (12) kreuzt.

2. Schleuderscheibe (1) nach Anspruch 1, **dadurch gekennzeichnet, dass** die zugeordnete Vertiefung (8) den proximalen Flügelabschnitt (5b) im Wesentlichen formschlüssig aufnimmt.

3. Schleuderscheibe (1) nach Anspruch 1 oder 2, **dadurch gekennzeichnet, dass** im Randabschnitt (12) eine Randhöhe des Vertiefungsrands (13) wenigstens gleich einer Randhöhe des Randes (11) des proximalen Flügelabschnitts (5b) im Randabschnitt (12) ist.

4. Schleuderscheibe (1) nach mindestens einem der vorangehenden Ansprüche, **dadurch gekennzeichnet, dass** ein radial außenliegender Teil (50) des distalen Flügelabschnitts (5a) in Bezug auf eine Oberfläche des Drehscheibenkörpers (2) auf der Flachseite (4) schräg nach oben geneigt ist.

5. Schleuderscheibe (1) nach Anspruch 4, **dadurch gekennzeichnet, dass** ein unterer und / oder ein oberer Rand (52, 53) des radial außenliegenden Teils (50) des distalen Flügelabschnitts (5a) mit der Oberfläche des Drehscheibenkörpers (2) auf der Flachseite (4) einen Winkel zwischen etwa 160 Grad und etwa 180 Grad einnehmen.

6. Schleuderscheibe (1) nach mindestens einem der vorangehenden Ansprüche, **dadurch gekennzeichnet, dass** die Arbeitsfläche (7) im Wesentlichen parallel zur Drehachse (6) des Drehscheibenkörpers (2) angeordnet ist.

7. Schleuderscheibe (1) nach mindestens einem der vorangehenden Ansprüche, **dadurch gekennzeichnet, dass** eine Längsrichtung des proximalen Flügelabschnitts (5b) zu einer Verbindungslinie (30) schräg angeordnet ist, welche einen Mittelpunkt des Drehscheibenkörpers (2), durch den die Drehachse (6) verläuft, mit einem Drehpunkt (31) im Bereich des proximalen Flügelabschnitts (5b) in Radialrichtung verbindet, um welchen der Wurfflügel (5) zum Ausbilden einer Schrägstellung des Wurfflügels (5) gedreht ist.

8. Schleuderscheibe (1) nach mindestens einem der vorangehenden Ansprüche, **dadurch gekennzeichnet, dass** die zugeordnete Vertiefung (8) in einem konischen Drehscheibenkörperabschnitt (40) angeordnet ist, in welchem der Drehscheibenkörper (2) im Vergleich zu einem anderen Drehscheibenkörperabschnitt mit größerer Drehscheibenkörperdicke ausgeführt ist.

9. Schleuderscheibe (1) nach mindestens einem der vorangehenden Ansprüche, **dadurch gekennzeichnet, dass** die zugeordnete Vertiefung (8) in einem konischen Drehscheibenkörperabschnitt (40) angeordnet ist, in welchem der Drehscheibenkörper (2) eine konische Form aufweist.

10. Schleuderscheibe (1) nach mindestens einem der vorangehenden Ansprüche, **dadurch gekennzeichnet, dass** der Drehscheibenkörper (2) ein Gussbauteil ist.

11. Schleuderscheibe (1) nach mindestens einem der vorangehenden Ansprüche, **dadurch gekennzeichnet, dass** der Drehscheibenkörper (2) mehrteilig mit Drehscheibenkörperteilen (2a, 2b) ausgeführt ist, die lösbar miteinander verbunden sind.

12. Schleuderscheibe (1) nach mindestens einem der vorangehenden Ansprüche, **dadurch gekennzeichnet, dass** der Drehscheibenkörper (2) auf einer zur Flachseite (4) gegenüberliegenden Flachseite (14) Scheibenverstärkungen (15) aufweist.

13. Landwirtschaftliche Verteilmaschine, mit einem Drehscheibenstreusystem, welches eingerichtet ist, Streupartikel eines auszubringenden Materials zu verteilen, wobei das Drehscheibenstreusystem eine Schleuderscheibe (1) nach mindestens einem der vorangehenden Ansprüche aufweist.

14. Landwirtschaftliche Verteilmaschine nach Anspruch 13, welche als landwirtschaftliche Düngerstreumaschine ausgeführt ist.
